# FASCICULE DE BREVET EUROPEEN

(11) **EP 4 598 816 B1**
(45) Date de publication et mention de la délivrance du brevet: **04.11.2026**
(21) Numéro de dépôt: 23799008.0
(22) Date de dépôt: 28.09.2023
(51) Int. Cl.: B64D 11/06, H05B 3/26, B64D 11/00, B60H 1/22

(54) **DISPOSITIF DE CHAUFFAGE RADIANT POUR AÉRONEF ET ÉLÉMENT DE CABINE COMPRENANT UN TEL DISPOSITIF**
STRAHLUNGSHEIZVORRICHTUNG FÜR EIN FLUGZEUG UND KABINENELEMENT MIT EINER SOLCHEN VORRICHTUNG
RADIANT HEATING DEVICE FOR AN AIRCRAFT AND CABIN ELEMENT COMPRISING SUCH A DEVICE

(30) Priorité: 05.10.2022 FR 2210187
(43) Date de publication de la demande: 13.08.2025
(73) Titulaire: Safran Seats, 78370 Plaisir (FR)
(72) Inventeur: FAIVRE, Arnaud, 77550 MOISSY CRAMAYEL (FR)
(74) Mandataire: Casalonga
(86) Numéro de dépôt international: PCT/FR2023/051496
(87) Numéro de publication internationale: WO 2024/074775

(56) Documents cités:
- KR-A- 20190 085 703
- KR-A- 20210 014 852

## Description

### Domaine technique

La présente invention concerne un dispositif de chauffage pour le confort thermique d'un passager dans une cabine d'aéronef et un élément de cabine comprenant un tel dispositif.

### Techniques antérieures

Un dispositif de chauffage électrique radiant diffuse la chaleur par rayonnement. Un tel dispositif comprend généralement une couche chauffante et une couche d'électrodes interposées entre deux couches isolantes.

Pour être intégré dans un aéronef, le dispositif de chauffage doit obtenir un certificat de navigabilité afin de garantir la sécurité des passagers en respectant notamment des contraintes strictes de résistance au feu.

Pour garantir le confort des passagers de l'aéronef et permettre aux passagers de toucher le dispositif de chauffage sans risque de brûlure, la température du dispositif de chauffage doit être contrôlée. F

Le document KR 2021 0014852 A décrit un dispositif de chauffage destiné à prévenir les dommages causés à un élément chauffant par un choc externe. Le dispositif de chauffage comprend : un boîtier comportant une ouverture formée sur l'une de ses faces ; un élément résistant à la chaleur disposé à l'intérieur du boîtier ; l'élément chauffant disposé dans l'élément résistant à la chaleur et chauffé par l'électricité fournie afin de dissiper la chaleur vers l'ouverture ; un élément isolant plan disposé sur la face opposée à l'ouverture parmi les deux faces de l'élément résistant à la chaleur à l'intérieur du boîtier ; et un couvercle recouvrant l'ouverture et dissipant la chaleur de l'élément chauffant vers l'extérieur. L'élément résistant à la chaleur est réalisé sous la forme d'une plaque.

### Exposé de l'invention

Au vu de ce qui précède, la présente invention a pour objectif de proposer un dispositif de chauffage particulièrement résistant au feu.

La présente invention a pour objet un dispositif de chauffage radiant pour aéronef comprenant une couche chauffante munie d'au moins une anode et d'au moins une cathode, une couche de protection avant et une couche de protection arrière disposées de part et d'autre de la couche chauffante, et une coque fixée sur la couche de protection avant, le dispositif comprenant au moins un capteur de température configuré pour fournir une information de température du dispositif de chauffage à une unité de contrôle externe.

Le capteur de température transmet l'information de température à l'unité de contrôle externe qui peut alors garantir le confort et la sécurité des passagers de l'aéronef.

Le capteur de température comprend une thermistance de type à coefficient de température négatif disposée sur la couche de protection arrière à l'opposé de la couche de protection avant.

Optionnellement, la coque comprend au moins un matériau thermoplastique résistant au feu, le matériau thermoplastique comprenant de préférence de l'acrylique et du polychlorure de vinyle.

Avantageusement, le dispositif comprend un premier moyen de fixation résistant au feu disposé entre la couche de protection avant et la coque.

Optionnellement, le premier moyen de fixation comprend un premier ruban adhésif double face, le premier ruban adhésif double face comprenant de préférence du tissu et du caoutchouc vulcanisé.

Avantageusement, le dispositif comprend un deuxième moyen de fixation résistant au feu disposé entre la couche de protection arrière et la couche chauffante.

Dans un mode de réalisation, le deuxième moyen de fixation comprend un deuxième ruban adhésif double face, le deuxième ruban adhésif double face comprenant de préférence du poly téréphtalate d'éthylène et de l'acrylique.

La couche de protection avant comprend du polyimide et un revêtement en cuivre.

Optionnellement, le dispositif comprend une couche de protection intermédiaire disposées entre la couche chauffante et le deuxième moyen de fixation.

Avantageusement, le dispositif comprend une couche d'isolation de chaleur radiante disposée entre la couche de protection arrière et le deuxième moyen de fixation.

L'invention a également pour objet un élément de cabine d'aéronef comprenant une unité de contrôle et au moins un dispositif de chauffage tel que défini précédemment, le capteur de température fournissant l'information de température du dispositif de chauffage à l'unité de contrôle.

### Brève description des dessins

D'autres buts, caractéristiques et avantages de l'invention apparaîtront à la lecture de la description suivante, donnée uniquement à titre d'exemple non limitatif et faite en référence au dessin annexé :
[Fig 1] illustre schématiquement un dispositif de chauffage radiant selon l'invention communiquant avec une unité de contrôle ; et
[Fig 2] illustre schématiquement un élément de cabine d'aéronef selon l'invention.

### Description détaillée

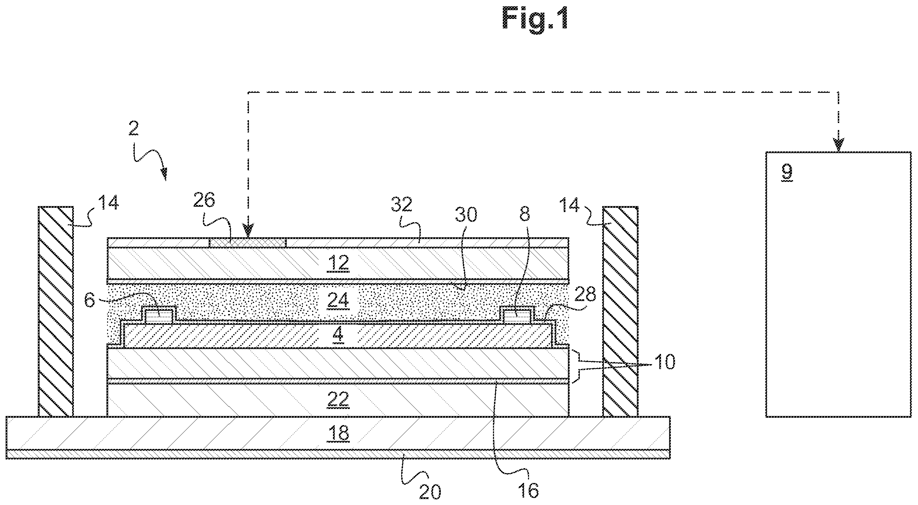

La figure 1 représente schématiquement un dispositif de chauffage 2 radiant destiné à équiper des équipements intérieurs d'une cabine d'un aéronef, par exemple un avion ou un hélicoptère, le dispositif de chauffage 2 comprenant plusieurs couches empilées de manière à former une structure multicouche.

Le dispositif de chauffage 2 comprend une couche chauffante 4 munie d'au moins une anode 6 et d'au moins une cathode 8 destinées à assurer l'interface avec des connexions électriques, l'anode 6 et la cathode 8 étant des éléments associés à la couche chauffante 4 mais distincts de la couche chauffante 4, l'anode 6 et la cathode 8 comprenant par exemple une encre métallique, par exemple une encre d'argent.

Les connexions électriques sont par exemple réalisées par des fils électriques et des connecteurs (non représentés) de manière à relier électriquement l'anode 6 et la cathode 8 à une unité de contrôle 9 externe de l'aéronef, l'unité de contrôle 9 étant apte à générer un courant électrique destiné à parcourir la couche chauffante 4 de sorte que la couche chauffante 4 émet de la chaleur radiante.

La couche chauffante 4 est apte à limiter la température de la chaleur radiante en-dessous d'une valeur seuil, notamment en augmentant la résistance électrique de la couche chauffante 4. Pour cela, la couche chauffante 4 comprend par exemple un matériau de type à coefficient de température positif ou un matériau ayant un coefficient de résistance thermique élevé, par exemple une encre de carbone ou un mélange de métaux comprenant du cuivre.

Dans un mode de réalisation, la couche chauffante 4 comprend plusieurs matériaux afin d'augmenter la flexibilité de la couche chauffante 4 et/ou de permettre différents niveaux de chaleur le long de la couche chauffante 4.

Le dispositif de chauffage 2 comprend une couche de protection avant 10 et une couche de protection arrière 12 disposées de part et d'autre de la couche chauffante 4. On entend par avant le côté du dispositif de chauffage 2 destiné à être orienté vers un passager de l'aéronef. On entend par arrière le côté du dispositif de chauffage 2 destiné à être orienté vers un support de l'aéronef (non représenté), le dispositif de chauffage 2 comprenant par exemple deux éléments de fixation 14 pour fixer le dispositif de chauffage 2 sur le support. Les éléments de fixation 14 comprennent par exemple des clips de fixation amovibles et/ou des attaches auto agrippantes et/ou des vis. Les couches de protection avant et arrière 10, 12 assurent la résistance mécanique et la protection électrique et environnementale du dispositif de chauffage 2, la protection environnementale correspondant par exemple à une protection contre l'humidité, contre la température extérieure au dispositif de chauffage 2 ou une protection chimique.

La couche de protection avant 10 comprend du polyimide et un revêtement en cuivre 16. Par exemple, l'épaisseur du polyimide est comprise entre 12 et 45 µm et l'épaisseur du revêtement en cuivre 16 est comprise entre 9 et 35 µm. Dans un mode de réalisation, la couche de protection comprend un matériau commercialisé sous la dénomination commerciale DuPont Pyralux AC ^{®}.

La couche de protection arrière 12 comprend par exemple du polyimide.

Le dispositif de chauffage 2 comprend une coque en matériau plastique 18 fixée sur la couche de protection avant 10. La coque en plastique 18 est susceptible de se retrouver en contact avec un passager. La coque en plastique 18 comprend au moins un matériau thermoplastique résistant au feu pour protéger le passager. En outre, le matériau thermoplastique possède une conductivité thermique élevée pour faciliter le transfert de chaleur depuis la couche chauffante 4 vers le passager et une inertie thermique permettant à la coque en plastique 18 d'atteindre une température de confort, la température de confort étant suffisamment élevée pour assurer le confort du passager et suffisamment basse pour être touchée par le passager sans risque de brûlure.

Le matériau thermoplastique est un matériau résistant au feu, ayant par exemple reçu des traitements de retardement des flammes. Le matériau thermoplastique comprend par exemple de l'acrylique et du polychlorure de vinyle, notamment de sorte que la coque en plastique 18 ait une longueur de brûlure inférieure à 5 mm et un temps moyen de flamme inférieur à 1 seconde lors d'un test de brûlure verticale de douze secondes, ou « vertical burn 12s » en termes anglo-saxons. Dans un mode de réalisation, le matériau thermoplastique comprend le matériau commercial Kydex 5555^{®}.

Optionnellement, le dispositif de chauffage 2 comprend une couche décorative 20 fixée sur la coque en plastique 18 et destinée à être visible par les passagers de l'aéronef, la couche décorative 20 ayant les mêmes propriétés que la coque en plastique 18, notamment en ce qui concerne la résistance au feu.

De préférence, la coque en plastique 18 est fixée sur la couche de protection avant 10 par l'intermédiaire d'un premier moyen de fixation 22 résistant au feu, le premier moyen de fixation 22 ayant par exemple reçu des traitements de retardement des flammes.

Le premier moyen de fixation 22 comprend par exemple un premier ruban adhésif double face. Dans un mode de mise en œuvre, le premier ruban adhésif double face comprend du tissu recouvert de part et d'autre de caoutchouc vulcanisé, l'épaisseur du premier ruban adhésif étant par exemple comprise entre 310 et 350 µm. Dans un mode de réalisation, le premier ruban adhésif double face comprend le matériau commercial Nitto P55^{®}.

De préférence, la couche chauffante 4 est fixée sur la couche de protection arrière 12 par l'intermédiaire d'un deuxième moyen de fixation 24 résistant au feu, le deuxième moyen de fixation 24 ayant par exemple reçu des traitements de retardement des flammes.

Le deuxième moyen de fixation 24 comprend par exemple un deuxième ruban adhésif double face. Dans un mode de mise en œuvre, le deuxième ruban adhésif double face comprend du poly téréphtalate d'éthylène recouvert de part et d'autre d'acrylique, l'épaisseur du deuxième ruban adhésif étant par exemple comprise entre 45 et 55 µm. Dans un mode de réalisation, le deuxième ruban adhésif double face comprend le matériau commercial Tesa 58372^{®}.

Le dispositif de chauffage 2 comprend au moins un capteur de température 26 apte à fournir une information de température du dispositif de chauffage 2 à l'unité de contrôle 9, notamment une information de température de la couche chauffante 4.

Le dispositif de chauffage 2 comprend une thermistance de type à coefficient de température négatif disposée sur la couche de protection arrière 12 à l'opposé de la couche de protection avant 10 et reliée électroniquement à l'unité de contrôle 9 externe, l'unité de contrôle 9 externe étant apte à commander la température du dispositif de chauffage 2 en fonction de l'information de température.

Optionnellement, le dispositif de chauffage 2 comprend une couche de protection intermédiaire 28 disposée entre la couche chauffante 4 et la couche de protection arrière 12, par exemple disposée entre la couche chauffante 4 et le deuxième moyen de fixation 24. La couche de protection intermédiaire 28 comprenant par exemple un solvant protégeant la couche chauffante 4 d'attaques mécaniques.

Le dispositif de chauffage 2 peut comprendre une couche thermiquement isolante 30 assurant une protection thermique contre la chaleur radiante. Cette couche thermiquement isolante 30 est disposée entre la couche chauffante 4 et la couche de protection arrière 12, par exemple disposée entre la couche de protection arrière 12 et le deuxième moyen de fixation 24. La couche thermiquement isolante 30 comprenant par exemple un matériau métallique de manière à réfléchir la chaleur radiante émise par la couche chauffante 4 et dirigée vers la couche de protection arrière 12 afin de la réorienter vers le passager. La couche thermiquement isolante 30 permet également d'augmenter la robustesse au feu du dispositif de chauffage 2.

Le dispositif de chauffage 2 peut encore comprendre une couche de protection dorsale 32 disposée sur la couche de protection arrière 12 à l'opposé de la couche de protection avant 10. La couche de protection dorsale 32 comprend par exemple une mousse d'isolation apte à limiter la quantité de chaleur radiante s'échappant du dispositif de chauffage 2 par la couche de protection arrière 12, notamment de manière à augmenter la chaleur radiante en direction de la couche de protection avant 10 et donc en direction du passager.

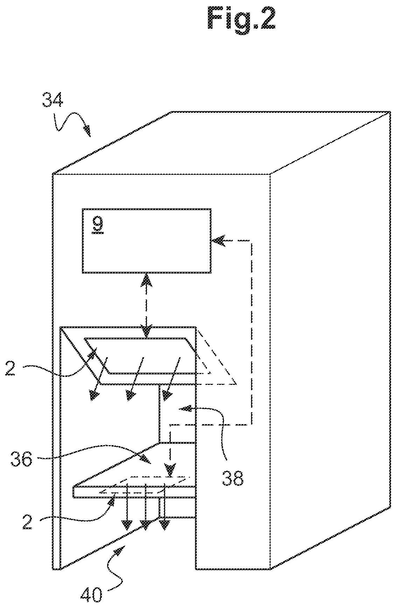

La figure 2 représente schématiquement un élément de cabine 34 de l'aéronef comprenant une unité de contrôle 9 et deux dispositif 2 de chauffage. L'unité de contrôle 9 est apte à contrôler la température des deux dispositifs 2 de chauffage, notamment par l'utilisation de l'information de température des deux dispositifs 2 de chauffage.

L'élément de cabine 34 est par exemple un siège de l'aéronef muni d'un panneau repose-jambes 36, d'un renfoncement pour les jambes 38 et d'un logement pour les pieds 40. Un passager de l'aéronef peut étendre ses jambes dans le renfoncement pour les jambes 38 de manière à reposer ses jambes sur le panneau repose-jambes 36 ou insérer ses pieds dans le logement pour les pieds 40. Les deux dispositifs 2 de chauffage sont aptes à réchauffer les jambes et/ou les pieds du passager en fonction de la position du passager.

Dans un autre mode de réalisation, l'élément de cabine 34 comprend une paroi de l'aéronef proche du passager, par exemple l'élément de cabine 34 comprend le faux plancher de la cabine de l'aéronef, le dispositif 2 de chauffage étant disposé sur la paroi de manière à réchauffer le passager.

## Revendications

1. Dispositif de chauffage (2) radiant pour aéronef comprenant une couche chauffante (4) munie d'au moins une anode (6) et d'au moins une cathode (8), une couche de protection avant (10) et une couche de protection arrière (12) disposées de part et d'autre de la couche chauffante (4), une coque (18) fixée sur la couche de protection avant (10), et au moins un capteur de température (26) configuré pour fournir une information de température du dispositif de chauffage (2) à une unité de contrôle (9) externe, le capteur de température (26) comprenant une thermistance de type à coefficient de température négatif disposée sur la couche de protection arrière (12) à l'opposé de la couche de protection avant (10), **caractérisé en ce que** la couche de protection avant (10) comprend du polyimide et un revêtement en cuivre (16).

2. Dispositif (2) selon la revendication 1, dans lequel la coque (18) comprend au moins un matériau thermoplastique résistant au feu.

3. Dispositif (2) selon la revendication 2, dans lequel le matériau thermoplastique résistant au feu de la coque (18) comprend de l'acrylique et du polychlorure de vinyle.

4. Dispositif (2) selon l'une quelconque des revendications 1 à 3, comprenant un premier moyen de fixation (22) résistant au feu disposé entre la couche de protection avant (10) et la coque (18).

5. Dispositif (2) selon la revendication 4, dans lequel le premier moyen de fixation (22) comprend un premier ruban adhésif double face.

6. Dispositif (2) selon la revendication 5, dans lequel le premier ruban adhésif double face comprend du tissu et du caoutchouc vulcanisé.

7. Dispositif (2) selon l'une quelconque des revendications 1 à 6, comprenant un deuxième moyen de fixation (24) résistant au feu disposé entre la couche de protection arrière (12) et la couche chauffante (4).

8. Dispositif (2) selon la revendication 7, dans lequel le deuxième moyen de fixation (24) comprend un deuxième ruban adhésif double face.

9. Dispositif (2) selon la revendication 8, dans lequel le deuxième ruban adhésif double face comprend du poly téréphtalate d'éthylène et de l'acrylique.

10. Dispositif (2) selon l'une quelconque des revendications 7 à 9, comprenant une couche de protection intermédiaire (28) disposée entre la couche chauffante (4) et le deuxième moyen de fixation (24).

11. Dispositif (2) selon l'une quelconque des revendications 7 à 10, comprenant une couche d'isolation de chaleur radiante (30) disposée entre la couche de protection arrière (12) et le deuxième moyen de fixation (24).

12. Elément de cabine d'aéronef comprenant une unité de contrôle (9) et au moins un dispositif (2) de chauffage selon l'une quelconque des revendications 1 à 11, le capteur de température (26) fournissant l'information de température du dispositif (2) de chauffage à l'unité de contrôle (9).

## Patentansprüche

1. Strahlungsheizvorrichtung (2) für Flugzeuge, umfassend eine Heizschicht (4), die mit mindestens einer Anode (6) und mindestens einer Kathode (8), einer vorderen Schutzschicht (10) und einer hinteren Schutzschicht (12) versehen ist, die auf beiden Seiten der Heizschicht (4) angeordnet sind, eine an der vorderen Schutzschicht (10) befestigte Schale (18) und mindestens einen Temperatursensor (26), der so eingerichtet ist, dass er eine Temperaturinformation der Heizvorrichtung (2) an eine externe Steuereinheit (9) liefert, der Temperatursensor (26), der einen Thermistor des Typs mit negativem Temperaturkoeffizienten umfasst, der auf der hinteren Schutzschicht (12) gegenüber der vorderen Schutzschicht (10) angeordnet ist, **dadurch gekennzeichnet, dass** die vordere Schutzschicht (10) Polyimid und eine Kupferbeschichtung (16) umfasst.

2. Vorrichtung (2) nach Anspruch 1, wobei die Schale (18) mindestens ein feuerbeständiges thermoplastisches Material umfasst.

3. Vorrichtung (2) nach Anspruch 2, wobei das feuerbeständige thermoplastische Material der Schale (18) Acryl und Polyvinylchlorid umfasst.

4. Vorrichtung (2) nach einem der Ansprüche 1 bis 3, umfassend ein erstes feuerbeständiges Befestigungsmittel (22), das zwischen der vorderen Schutzschicht (10) und der Schale (18) angeordnet ist.

5. Vorrichtung (2) nach Anspruch 4, wobei das erste Befestigungsmittel (22) ein erstes doppelseitiges Klebeband umfasst.

6. Vorrichtung (2) nach Anspruch 5, wobei das erste doppelseitige Klebeband Gewebe und vulkanisierten Kautschuk umfasst.

7. Vorrichtung (2) nach einem der Ansprüche 1 bis 6, umfassend ein zweites feuerbeständiges Befestigungsmittel (24), das zwischen der hinteren Schutzschicht (12) und der Heizschicht (4) angeordnet ist.

8. Vorrichtung (2) nach Anspruch 7, wobei das zweite Befestigungsmittel (24) ein zweites doppelseitiges Klebeband umfasst.

9. Vorrichtung (2) nach Anspruch 8, wobei das zweite doppelseitige Klebeband Polyethylenterephthalat und Acryl umfasst.

10. Vorrichtung (2) nach einem der Ansprüche 7 bis 9, umfassend eine zwischen der Heizschicht (4) und dem zweiten Befestigungsmittel (24) angeordnete Zwischenschutzschicht (28).

11. Vorrichtung (2) nach einem der Ansprüche 7 bis 10, umfassend eine zwischen der hinteren Schutzschicht (12) und dem zweiten Befestigungsmittel (24) angeordnete Strahlungswärmedämmschicht (30).

12. Kabinenelement für Flugzeuge, das eine Steuereinheit (9) und mindestens eine Heizvorrichtung (2) nach einem der Ansprüche 1 bis 11 umfasst, wobei der Temperatursensor (26) die Temperaturinformation der Heizvorrichtung (2) an die Steuereinheit (9) liefert.

## Claims

1. Radiant heating device (2) for an aircraft comprising a heating layer (4) provided with at least one anode (6) and at least one cathode (8), a front protective layer (10) and a rear protective layer (12) disposed on either side of the heating layer (4), a shell (18) secured to the front protective layer (10), and at least one temperature sensor (26) configured to provide temperature information on the heating device (2) to an external control unit (9), the temperature sensor (26) comprising a thermistor of the negative temperature coefficient type disposed on the rear protective layer (12) opposite the front protective layer (10), **characterised in that** the front protective layer (10) comprises a polyimide and a copper coating (16).

2. Device (2) according to Claim 1, wherein the shell (18) comprises at least one fire-resistant thermoplastic material.

3. Device (2) according to Claim 2, wherein the fire-resistant thermoplastic material of the shell (18) comprises acrylic and polyvinyl chloride.

4. Device (2) according to one of Claims 1 to 3, comprising a first fire-resistant securing means (22) disposed between the front protective layer (10) and the shell (18).

5. Device (2) according to Claim 4, wherein the first securing means (22) comprises a first double-sided adhesive tape.

6. Device (2) according to Claim 5, wherein the first double-sided adhesive tape comprises fabric and vulcanised rubber.

7. Device (2) according to any one of Claims 1 to 6, comprising a second fire-resistant securing means (24) disposed between the rear protective layer (12) and the heating layer (4).

8. Device (2) according to Claim 7, wherein the second securing means (24) comprises a second double-sided adhesive tape.

9. Device (2) according to Claim 8, wherein the second double-sided adhesive tape comprises polyethylene terephthalate and acrylic.

10. Device (2) according to any one of Claims 7 to 9, comprising an intermediate protective layer (28) disposed between the heating layer (4) and the second securing means (24).

11. Device (2) according to any one of Claims 7 to 10, comprising a radiant heat insulation layer (30) disposed between the rear protective layer (12) and the second securing means (24).

12. Aircraft cabin element comprising a control unit (9) and at least one heating device (2) according to any one of Claims 1 to 11, the temperature sensor (26) providing the temperature information on the heating device (2) to the control unit (9).
